# EUROPEAN PATENT APPLICATION

(11) **EP 4 325 990 A1**
(43) Date of publication of application: **21.02.2024**
(21) Application number: 21936462.7
(22) Date of filing: 16.04.2021
(51) Int. Cl.: H04W 76/15

(54) **COMMUNICATION METHOD AND COMMUNICATION APPARATUS UNDER MULTIPLE CONNECTIONS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/087810
(87) International publication number: WO 2022/217587

(57) **Abstract**

The present disclosure provides a communication method and a communication apparatus under multiple connections. The communication method comprises: a communication method under multiple connections, applied to an access point supporting multi-connection communication, and comprising: determining a first message frame under a first connection of a plurality of connections, wherein the first message frame comprises time information for transmitting a delivery communication indication message DTIM beacon frame under other connections of the plurality of connections different from the first connection; and sending the first message frame under the first connection.

## Description

### TECHNICAL FIELD

The disclosure relates to the field of wireless communication, in particular to a communication method on multiple links and a communication device on multiple links.

### BACKGROUND

Current Wireless Fidelity (Wi-Fi) technology studies about bandwidth transmission of 320MHz, aggregation and coordination of multiple frequency bands or others, expect to increase the speed and throughput by at least four times compared with the existing standard. The main application scenarios include video transmission, Augmented Reality (AR), Virtual Reality (VR), or other situations.

The "aggregation and coordination of multiple frequency bands" means that devices communicate with each other in frequency bands of 2.4GHz, 5GHz, and 6GHz at the same time. For the communication performed among devices in multiple frequency bands at the same time, a new Media Access Control (MAC) mechanism needs to be defined for management. In addition, low-latency transmission is expected to be supported by the aggregation and coordination of multiple frequency bands.

Now, the maximum bandwidth supported by the aggregation and coordination of multiple frequency bands is 320MHz (160MHz+160MHz). In addition, 240MHz (160MHz+80MHz) and other bandwidths are also supported.

In the current Wi-Fi technology, both an Access Point (AP) and a station (STA) may be multi-link devices (MLDs), i.e., supporting a function of simultaneously sending and/or receiving data on multiple links at a moment. Therefore, there may be multiple links between the AP MLD and the STA MLD, and communication between the two devices on multiple links is currently being studied.

### SUMMARY

Various aspects of the disclosure will at least address the above problems and/or drawbacks. Embodiments of the disclosure provide the following technical solutions.

A communication method on multiple links is provided according to embodiments of the disclosure. The communication method is performed by an access point (AP) supporting a multi-link communication. The method includes: determining a first message frame on a first link of the multiple links, in which the first message frame includes time information for sending a delivery traffic indication map (DTIM) beacon frame on another link of the multiple links other than the first link; and sending the first message frame on the first link.

A communication method on multiple links is provided according to embodiments of the disclosure. The communication method is performed by a station (STA) supporting a multi-link communication. The method includes: receiving a first message frame on a first link of the multiple links, in which the first message frame includes time information for sending a DTIM beacon frame on another link of the multiple links other than the first link; and performing a communication operation based on the first message frame.

A communication device on multiple links is provided according to embodiments of the disclosure. The communication device is applied to an AP supporting a multi-link communication. The device includes: a processing module configured to determine a first message frame on a first link of the multiple links, in which the first message frame includes time information for sending a DTIM beacon frame on another link of the multiple links other than the first link; and a transceiver module configured to send the first message frame on the first link.

A communication device on multiple links is provided according to embodiments of the disclosure. The communication device is applied to a STA supporting a multi-link communication. The device includes: a transceiver module configured to receive a first message frame on a first link of the multiple links, in which the first message frame includes time information for sending a DTIM beacon frame on another link of the multiple links other than the first link; and a processing module configured to perform a communication operation based on the first message frame.

An electronic device is provided according to embodiments of the disclosure. The electronic device includes a memory, a processor and a computer program stored on the memory and executable by the processor. When the computer program is executed by the processor, the above method is performed.

A computer-readable storage medium is provided according to n embodiments of the disclosure. The computer-readable storage medium has a computer program stored thereon. When the computer program is executed by a processor, the above method is performed.

The technical solutions according to embodiments of the disclosure will help the device to save power.

### BRIEF DESCRIPTION OF THE DRAWINGS

The above and additional features of embodiments of the disclosure will become more apparent by describing the embodiments of the disclosure in detail with reference to the accompanying drawings.
FIG. 1 is a schematic diagram illustrating a communication scenario on multiple links.
FIG. 2 is a flowchart illustrating a communication method according to embodiments of the disclosure.
FIG. 3 is a detailed flowchart illustrating a communication method according to embodiments of the disclosure.
FIG. 4 is a flowchart illustrating another communication method according to embodiments of the disclosure.
FIG. 5 is a detailed flowchart illustrating another communication method according to embodiments of the disclosure.
FIG. 6 is a block diagram illustrating a communication device according to embodiments of the disclosure.

### DETAILED DESCRIPTION

The following description with reference to the accompanying drawings is provided to fully understand the various embodiments of the disclosure as defined by the appended claims and their equivalents. The various embodiments of the disclosure include various specific details, but such specific details are considered to be exemplary only. In addition, descriptions of well-known techniques, functions and constructions may be omitted for the sake of clarity and brevity.

Terms and words used in the disclosure are not limited to written meanings, but are used by inventors to enable a clear and consistent understanding of the disclosure. Therefore, for those skilled in the art, the description of various embodiments of the disclosure is provided only for the purpose of illustration, but not for the purpose of limitation.

It is understandable that "a", "an", "said", and "the" in singular forms used herein can also include plural forms, unless clearly indicated in the context otherwise. It should be further understood that the word "include" used in the disclosure refers to the existence of described features, integers, steps, operations, elements, and/or assemblies, but does not exclude the existence or addition of one or more other features, integers, steps, operations, elements, assemblies, and/or groups thereof.

It is understandable that although the terms "first" and "second" and the like can be used herein to describe various elements, these elements should not be limited by these terms. These terms are only used to distinguish one element from another. Therefore, a first element discussed below may be referred to as a second element without departing from the teaching of the embodiments.

It is understandable that when an element is referred to as being "connected" or "coupled" to another element, it may be directly connected or coupled to other elements, or intervening elements may also exist. In addition, as used herein, "connected" or "coupled" may include wireless connection or wireless coupling. The term "and/or" or the expression "at least one of..." used herein includes any and all combinations of one or more related listed items.

Unless otherwise defined, all terms used herein, including technical terms and scientific terms, have the same meaning as generally understood by those skilled in the art to which this disclosure belongs.

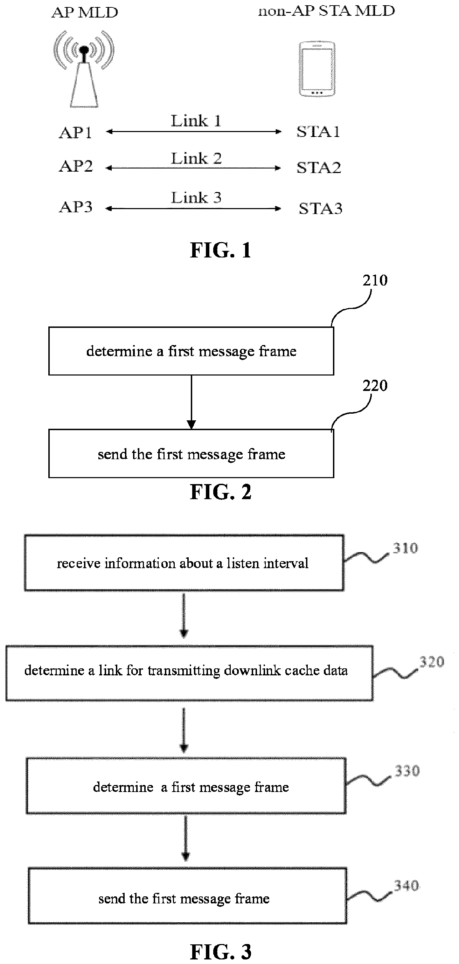

FIG. 1 is a schematic diagram illustrating a communication scenario on multiple links.

In a wireless Local Area Network (LAN), a Basic Service Set (BSS) can include an access point (AP) and one or more stations (STAs) that communicate with the AP. One BSS can connect to a Distribution System (DS) through its AP, and then connect to another BSS, to form an Extended Service Set (ESS).

The AP is a wireless switch used for the wireless network and is a core of the wireless network. The AP device can be used as a wireless base station and mainly used as a bridge to connect the wireless network and a wired network. With this AP, the wired and wireless networks can be integrated.

The AP may include software applications and/or circuitries to enable other types of nodes in the wireless network to communicate with outside and inside of the wireless network via the AP. For example, the AP can be a terminal device or a network device equipped with a Wi-Fi chip.

For example, the STA may include, but is not limited to: a cellular phone, a smart phone, a wearable device, a computer, a Personal Digital Assistant (PDA), a Personal Communication System (PCS) device, a Personal Information Manager (PIM), a Personal Navigation Device (PND), a global positioning system, a multimedia device, an Internet of Thing (IoT) device, and others.

In embodiments of the disclosure, the AP and the STA may each be a device supporting the multi-link, denoted as AP multi-link device (MLD) and non-AP STA MLD respectively. For ease of description, in the following, an example in which one AP MLD communicates with one STA MLD on multiple links is mainly described, which is not limited in the embodiments of the disclosure.

In FIG. 1, for example, the AP MLD may represent an AP having a capability that supports the multi-link communication, and the non-AP STA MLD may represent a STA having a capability that supports the multi-link communication. As illustrated in FIG. 1, the AP MLD, such as AP1, AP2, and AP3 as illustrated in FIG. 1,nmay operate on three links, and the non-AP STA MLD, such as STA1, STA2, and STA3 as illustrated in FIG. 1, may also operate on three links. In the example of FIG. 1, it is assumed that AP1 communicates with STA1 on a corresponding first link (i.e., Link 1), and similarly, AP2 communicates with STA2 on a second link (i.e., Link 2), and AP3 communicate with STA3 on a third link (i.e., Link 3). Link 1 to Link 3 are links under different frequencies, e.g., links at 2.4 GHz, 5 GHz, 6 GHz, or other frequencies, or links at the same or different bandwidths at 2.4GHz, 5GHz, and 6GHz. Moreover, each link may include a plurality of channels. However, it is understandable that the communication scenario illustrated in FIG. 1 is only an example, and the inventive concept is not limited thereto. For example, the AP MLD may be connected to multiple non-AP STA MLDs, or the AP may communicates with various types of STAs on each link.

In an extreme high-throughput (EHT) communication environment, a non-AP STA MLD in a power saving (PS) state shall be able to monitor beacon frames on one or more enabled links and to perform basic operations, such as receiving a traffic indication, time synchronization, receiving BSS parameter updates, and others. In addition, an AP MLD shall assign a single Association Identifier (AID) to a non-AP MLD upon successful multi-link setup, and all the STAs of the non-AP STA MLD shall have the same AID as the one assigned to the non-AP STA MLD during the multi-link setup. That is, the AID assigned during the multi-link setup may be of the MLD level.

When the non-AP STA MLD in the PS state receives a traffic indication on one link, the non-AP STA MLD determines, based on a traffic indication map (TIM) in the received beacon frame, whether to wake up to receive a cached downlink data frame. Since broadcast periods of the beacon frame and the delivery traffic indication map (DTIM) periods are different between the affiliated APs (AP1, AP2, and AP3 in FIG. 1) of the AP MLD, if the non-AP STA MLD wakes up and receives the beacon frames on one link, in which the beacon frame only identifies that there is a cached downlink data frame on other links, but does not identify time information related to the DTIM (e.g., an arrival time point of the DTIM beacon frame), the STAs belonging to the same non-AP STA MLD will wake up consecutively on the other links to monitor the beacon frames, which is unconducive to saving power. In view of this, embodiments according to the inventive concept provide a communication method on multiple links and a communication device on multiple links.

FIG. 2 is a flowchart illustrating a communication method according to an embodiment of the disclosure. The communication method illustrated in FIG. 2 can be performed by an AP MLD that supports a multi-link communication.

As illustrated in FIG. 2, at block 210, a first message frame is determined. In detail, the first message frame is determined on a first link of the multiple links. According to an embodiment of the disclosure, the first message frame may include time information for sending a DTIM beacon frame on one or more other links of the multiple links other than the first link. According to an embodiment, the multiple links may be links established for communication between the AP MLD and the non-AP STA MLD. The one or more other links other than the first link may be all the remaining links of the multiple links except the first link, or a portion of the remaining links of the multiple links except the first link, which may be determined based on the presence or absence of the cached downlink data frame on each link.

The first message frame may be a beacon frame. In embodiments of the disclosure, there may be various ways to determine the first message frame. For example, the AP MLD may generate the first message frame based on at least one of the followings: network conditions, load conditions, hardware capabilities of a sending/receiving device, service types, and relevant protocol provisions, which is not specifically limited in embodiments of the disclosure. In embodiments of the disclosure, the AP MLD may also obtain the first message frame from an external device, which is not limited in embodiments of the disclosure.

According to embodiments of the disclosure, the first message frame further includes: a link identifier (ID) corresponding to each link on which the DTIM beacon frame is sent. For example, the format of the first message frame may be shown in Table 1 below.

**Table 1: format of the first message frame**

| | | | | |
|---|---|---|---|---|
| ··· ··· | Link set/Link ID (link ID) | DTIM1 | DTIM2 | ··· ··· |

As shown in Table 1, the link ID included in the first message frame may be an ID of a link set (i.e., the Link set) or an ID of an individual link (i.e., the Link ID).

In embodiments of the disclosure, for the Link set, for example, when n links are established for communication between an initiator and a receiver, the Link set may have n bits (in which each bit corresponding to each of the n links), and if a corresponding bit in the Link set is set to a first value (e.g., "1"), it identifies that the first message frame includes the DTIM time information of the link corresponding to the bit.

In another embodiment of the disclosure, for the Link ID, the first message frame may carry one or more Link IDs corresponding to one or more other links on which there is the downlink cache data. For example, but being not limited to, each Link ID is a combination of an operating spectrum, a bandwidth/channel, and a basic service set identifier (BSSID). Each Link ID in Table 1 may indicate that the first message frame includes the DTIM time information corresponding to respective Link ID.

In Table 1, DTIM1, DTIM2 and others may correspond to the time information for subsequently sending the DTIM beacon frame on the corresponding link. In an embodiment, the time information is represented by a DTIM period or a DTIM timing offset. For example, the DTIM period may refer to a time interval for broadcasting the DTIM beacon frame. For example, the DTIM timing offset may refer to a Target Beacon Transmission Time (TBTT) offset.

By carrying the time information and the link ID in the first message frame, the AP MLD can notify, on one link (i.e., the Link 1), the STA of the DTIM time information (e.g., a sending time point or an arrival time point of the DTIM beacon frame) of the one or more other links, and thus the STAs corresponding to the one or more other links can wake up based on the corresponding time information to monitor the beacon frames. Therefore, the STAs will not wake up consecutively, which contributes to saving power.

According to embodiments of the disclosure, the first message frame can include a TIM element, and the time information and/or the link ID shown in Table 1 can be included in the TIM element. If the TIM element carries the time information and/or the link ID shown in Table 1, the STAs can easily learn the DTIM time information corresponding to different links by only analyzing the TIM element.

As a descriptive embodiment only, the format of the TIM element may be shown in Table 2 below.

**Table 2: format of the TIM element**

| | | | | | | | |
|---|---|---|---|---|---|---|---|
| Element ID | Length | DTIM Count | ··· ··· | Link set/Link ID | DTIM1 | DTIM2 | ··· ··· |

As shown in Table 2, the "Element ID" may represent the TIM element corresponding to the element, the "Length" may represent a length of the TIM element, the "DTIM Count" can be a variable count value, in which when the "DTIM Count" equals to 0, it represents that the TIM is a DTIM, the "Link set/Link ID", the "DTIM1", and the "DTIM2" can be referred to similar embodiments with reference to Table 1, and repetitive description is omitted herein to avoid redundancy.

It is understandable that the content shown in Table 2 is only descriptive, but does not used to limit the disclosure. For example, in Table 2, some contents may be omitted or more contents, such as Bitmap Control or Partial Virtual Bitmap, may be included. For example, when the Bitmap Control or the Partial Virtual Bitmap are included in Table 2, representing AID(s) of one or more STAs on which cached downlink data frame exists, the "Link set/Link ID" may indicate information of link(s) on which cached downlink data frame exists. In addition, although not specifically shown, when the cached downlink data frame also exists on this link (e.g., Link 1), its associated time information may also be carried in the first message frame (e.g., TIM element).

According to another embodiment of the disclosure, the first message frame includes a reduced neighbor report element (RNRE). In this case, the time information and/or the Link ID shown in Table 1 are included in the RNRE. The RNRE may carry the TBTT offsets of other affiliated APs of the same AP MLD. For example, the TBTT offsets may be included in a TBTT information field of the RNRE and may each correspond to the time information for sending the DTIM beacon frame on a corresponding link. By carrying the time information and/or the Link ID in the RNRE, changes to the format of existing element (e.g., TIM element) can be avoided, to facilitate backward compatibility.

As shown in Table 2, at block 220, the first message frame is sent on the first link. When the non-AP STA MLD in the PS state receives the traffic indication on a link (i.e., Link 1), the non-AP STA MLD determines, based on the link ID(s) of one or more other links and the DTIM time information carried in the first message frame, a respective time when each link wakes up to receive the cached downlink data frame.

FIG. 3 is a detailed flowchart illustrating a communication method according to an embodiment of the disclosure. The communication method illustrated in FIG. 3 can be performed by an AP MLD that supports a multi-link communication.

As illustrated in FIG. 3, at block 310, a second message frame is received from a non-AP STA MLD that supports the multi-link communication, in which the second message frame includes information about a listen intervals of the non-AP STA MLD. The LI may be a period of monitoring the beacon frames by the non-AP STA MLD in the PS state.

According to embodiments of the disclosure, the second message frame may be, for example, but is not limited to, an association request frame or a re-association request frame. That is, during an initial association/re-association setup process (e.g., the multi-link setup/re-setup process), the AP MLD may receive the second message frame carrying the LI of the non-AP STA MLD from the non-AP STA MLD on one of the multiple links, and broadcast the beacon frames periodically according to the LI period. For example, the identification bit of the LI may be included in a common info field or a STA info field of a multi-link (ML) element of the second message frame (which is an association request frame or re-association request frame). The negotiated LI may be of the MLD level, i.e., the LI negotiated on one link may be applied to all the established links.

At block 320, one or more links for transmitting downlink cache data are determined. For the AP MLD, the link(s) for transmitting (sending) downlink cache data can be determined based on the load conditions on each link and information about such link(s) is sent to the STA in the form of a frame. As an embodiment, information about such link(s) can be represented in the form of a link set or a link ID.

Blocks 330 and 340 of FIG. 3 may be similar to blocks 210 and 220 of FIG. 2, respectively, and repeated descriptions are omitted herein to avoid redundancy.

According to embodiments of the disclosure, since the link(s) for transmitting the downlink cache data has/have been determined in block 320 and the LI (e.g., LI period) has been determined in block 310, the AP MLD may periodically broadcast the beacon frame TIM information (in the TIM information, it identifies that the cached downlink data frame exists on one or more other links). Further, the AP MDL may set, in the first message frame as described in block 330 (or block 210), the DTIM periods or the DTIM timing offsets for other links, to enable the STA to determine the TBTT time points on the other links.

It is understandable that the communication method illustrated in FIG. 3 is only an example and is not limited in the disclosure, and some of the blocks may be omitted or additional blocks may be added. For example, the communication method illustrated in FIG. 3 may further include, before the block 330, periodically sending additional frames carrying the following information. The information may identify the link(s), among the established multiple links, where the cached downlink data frame exists. The first message frame including the time information for sending the DTIM beacon frame can be determined and sent on such link(s) in block 330.

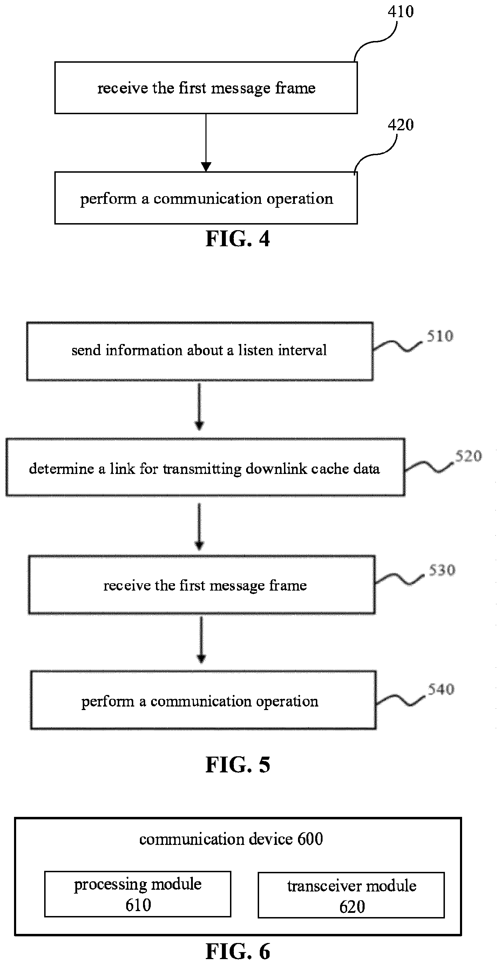

FIG. 4 is a flowchart illustrating another communication method according to an embodiment of the disclosure. The communication method illustrated in FIG. 4 can be performed by a non-AP STA MLD that supports a multi-link communication.

As illustrated in FIG. 4, at block 410, a first message frame is received on a first link of the multiple links, in which the first message frame includes time information for sending a DTIM beacon frame on one or more other links of the multiple links other than the first link.

According to embodiments of the disclosure, the time information for sending the DTIM beacon frame is represented by a DTIM period or a DTIM timing offset.

According to embodiments of the disclosure, the first message frame further includes: a link ID corresponding to each link on which the DTIM beacon frame is sent.

According to embodiments of the disclosure, the first message frame includes a TIM element, and the time information and/or the link ID are included in the TIM element.

According to embodiments of the disclosure, the first message frame includes a RNRE, and the time information and/or the link ID are included in the RNRE.

The first message frame, the time information, the link ID, the TIM element, and the RNRE described in block 410 may be similar to the embodiments described in block 210 of FIG. 2, and repetitive descriptions are omitted herein for the sake of brevity.

At block 420, a communication operation is performed based on the first message frame. For example, based on the time information and/or link ID carried by the first message frame, the STA(s) corresponding to the one or more other links may periodically wake up to receive the DTIM beacon frame and may subsequently receive the downlink data frame cached for them by the AP MLD.

FIG. 5 is a detailed flowchart illustrating another communication method according to an embodiment of the disclosure. The communication method illustrated in FIG. 5 can be performed by a non-AP STA MLD that supports a multi-link communication.

As illustrated in FIG. 5, at block 510, a second message frame is sent to an AP MLD that supports the multi-link communication, in which the second message frame includes information about a LI of the non-AP STA MLD. That is, the non-AP STA MLD may negotiate with the AP MLD on the LI on one of the multiple links during the initial association/re-association establishment process (i.e., the multi-link setup/re-setup process) to periodically monitor the beacon frames broadcast by the AP MLD. For example, the identification bit of the LI may be included in the common info field or the STA info field of the ML element of the second message frame (e.g., the association request frame or the re-association request frame). The negotiated LI can be of the MLD level, i.e., the negotiated LI on one link can be applied to all the multiple links established.

At block 520, link(s) for transmitting downlink cache data is/are determined. For example, the non-AP STA MLD may determine, based on the TIM information from the AP MLD, the link(s) for transmitting (receiving) downlink cache data. According to embodiments of the disclosure, after establishing multiple links between the non-AP STA MLD and the AP MLD, an action frame may be defined to determine the link(s) for receiving downlink cache data frame. The action frame may include: link ID(s) for determining the link(s) where the downlink cached data frame is/are received. Since multiple links are established between both parties in block 510, the Link set can be used to identify the link(s) for receiving the downlink cached data frame. For example, but being not limited to, in the link set having a plurality of bits, a bit corresponding to an individual link ID may be set to "1" to identify that the corresponding link is a link for receiving the downlink cached data frame. There may be multiple such links, and the link(s) may also be those used for negotiating the LI in block 510.

The block 530 and the block 540 of FIG. 5 may be similar to the blocks 410 and 420 of FIG. 4 respectively, and repeated descriptions are omitted herein to avoid redundancy.

According to embodiments of the disclosure, since the link(s) for transmitting downlink cached data has/have been determined in the block 520 and the LI (e.g., the LI period) has been determined in block 510, the non-AP STA MLD may periodically monitor the beacon frame TIM information broadcasted by the AP MLD (in the TIM information, it identifies that the cached downlink data frame exists on one or more other links). Further, the non-AP STA MLD may obtain the DTIM period*s) or the DTIM timing offset(s) on one or more other links from the first message frame described in the block 530 (or the block 410), to determine the TBTT time points on one or more other links.

FIG. 6 is a block diagram illustrating a communication device 600 according to an embodiment of the disclosure.

As illustrated in FIG. 6, the communication device 600 includes: a processing module 610 and a transceiver module 620. The communication device illustrated in FIG. 6 may be applied to an AP MLD or a non-AP STA MLD.

In the case where the communication device illustrated in FIG. 6 is applied to an AP MLD, the processing module 610 is configured to determine a first message frame on a first link of the multiple links, in which the first message frame includes time information for sending a DTIM beacon frame on one or more other links of the multiple links other than the first link. The transceiver module 620 is configured to send the first message frame on the first link. In this case, the communication device 600 may perform the communication method described with reference to FIG. 2 and/or FIG. 3, and the repeated descriptions are omitted herein for the sake of brevity.

In the case where the communication device illustrated in FIG. 6 is applied to a non-AP STA MLD, the transceiver module 620 is configured to receive a first message frame on a first link of the multiple links, in which the first message frame includes time information for sending a DTIM beacon frame on one or more other links of the multiple links other than the first link. The processing module 610 is configured to perform a communication operation based on the first message frame. In this case, the communication device 600 may perform the communication method described with reference to FIG. 4 and/or FIG. 5, and the repeated descriptions are omitted herein for the sake of brevity.

In addition, the communication device 600 illustrated in FIG. 6 is only an example, which is not limited in embodiments of the disclosure. For example, the communication device 600 may include other modules, such as, memory module. In addition, the modules in the communication device 600 may be combined into more complex modules or may be divided into more separate modules.

The communication method and the communication device according to embodiments of the disclosure can enable the non-AP STA MLD in the PS state to periodically wake up on different links to receive the cached downlink data frame, so as to better save power.

Based on the same principles as the method provided in embodiments of the disclosure, embodiments of the disclosure also provide an electronic device including a processor and a memory. The memory stores machine-readable instructions (which may also be referred to as "computer programs"), and the processor is configured to execute the machine-readable instructions, to perform the method described with reference to FIGS. 2 to 5.

Embodiments of the disclosure also provide a computer-readable storage medium having computer programs stored thereon. When the computer programs are executed by a processor, the method described with reference to FIGS. 2 to 5 is performed.

In embodiments, the processor may be a logic box, a module, or a circuit, for implementing or executing various embodiments described in the disclosure, for example, a Central Processing Unit (CPU), a general processor, a Digital Signal Processor (DSP), an Application Specific Integrated Circuit (ASIC), a Field Programmable Gate Array (FPGA) or other programmable logic devices, a transistor logic device, a hardware component, or any combination thereof. The processor may also be a combination used to implement a computing function, for example, a combination consisting of one or more microprocessors, and a combination consisting of DSPs and microprocessors.

In embodiments, the memory may be, for example, a Read Only Memory (ROM), a Random Access Memory (RAM), an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store program codes in the form of instructions or data structures and can be accessed by a computer, which is not limited herein.

It is understandable that although steps in the flowchart of the accompanying drawings are shown sequentially as indicated by the arrows, the steps are not necessarily performed sequentially in the order indicated by the arrows. Unless explicitly stated otherwise in the disclosure, there is no strict sequential limitation on the execution of these steps, which may be performed in any other order. In addition, at least some of the steps in the flowchart of the accompanying drawings may include a plurality of sub-steps or a plurality of phases, which are not necessarily executed at the same time, but may be executed at different times. The execution order is not necessarily sequential, and the steps can be performed alternately or alternatively with other steps or at least part of sub-steps or phases of other steps.

Although the disclosure has been shown and described with reference to the embodiments of the disclosure, it will be understood by those skilled in the art that various changes in form and detail can be made without departing from the scope of the disclosure. Accordingly, the scope of the disclosure should not be limited by the embodiments, but should be defined by the appended claims and their equivalents.

## Claims

1. A communication method on multiple links, performed by an access point supporting a multi-link communication, comprising:
determining a first message frame on a first link of the multiple links, wherein the first message frame comprises time information for sending a delivery traffic indication map (DTIM) beacon frame on one or more other links of the multiple links other than the first link; and
sending the first message frame on the first link.

2. The method of claim 1, wherein the time information for sending the DTIM beacon frame is represented by a DTIM period or a DTIM timing offset.

3. The method of claim 1, wherein the first message frame further comprises: a link identifier (ID) of each link on which the DTIM beacon frame is sent.

4. The method of claim 3, wherein the first message frame comprises a traffic indication map (TIM) element, and the time information and/or the link ID are included in the TIM element.

5. The method of claim 3, wherein the first message frame comprises a reduced neighbor report element (RNRE), and the time information and/or the link ID are included in the RNRE.

6. The method of any one of claims 1 to 5, further comprising:
receiving a second message frame from a station supporting the multi-link communication, wherein the second message frame comprises information about a listen interval of the station.

7. The method of any one of claims 1 to 5, further comprising: determining a link for transmitting downlink cache data.

8. A communication method on multiple links, performed by a station supporting a multi-link communication, comprising:
receiving a first message frame on a first link of the multiple links, wherein the first message frame comprises time information for sending a delivery traffic indication map (DTIM) beacon frame on one or more other links of the multiple links other than the first link; and
performing a communication operation based on the first message frame.

9. The method of claim 8, wherein the time information for sending the DTIM beacon frame is represented by a DTIM period or a DTIM timing offset.

10. The method of claim 8, wherein the first message frame further comprises: a link identifier (ID) of each link on which the DTIM beacon frame is sent.

11. The method of claim 10, wherein the first message frame comprises a traffic indication map (TIM) element, and the time information and/or the link ID are included in the TIM element.

12. The method of claim 10, wherein the first message frame comprises a reduced neighbor report element (RNRE), and the time information and/or the link ID are included in the RNRE.

13. The method of any one of claims 8 to 12, further comprising:
sending a second message frame to an access point supporting a multi-link communication, wherein the second message frame comprises information about a listen interval of the station.

14. The method of any one of claims 8 to 12, further comprising: determining a link for transmitting downlink cache data.

15. A communication device on multiple links, applied to an access point supporting a multi-link communication, comprising:
a processing module, configured to determine a first message frame on a first link of the multiple links, wherein the first message frame comprises time information for sending a delivery traffic indication map (DTIM) beacon frame on one or more other links of the multiple links other than the first link; and
a transceiver module, configured to send the first message frame on the first link.

16. A communication device on multiple links, applied to a station supporting a multi-link communication, comprising:
a transceiver module, configured to receive a first message frame on a first link of the multiple links, wherein the first message frame comprises time information for sending a delivery traffic indication map (DTIM) beacon frame on one or more other links of the multiple links other than the first link; and
a processing module, configured to perform a communication operation based on the first message frame.

17. An electronic device, comprising a memory, a processor and a computer program stored on the memory and executable by the processor, wherein when the computer program is executed by the processor, the method of any one of claims 1 to 7 or the method of any one of claims 8 to 14 is performed.

18. A computer-readable storage medium, having a computer program stored thereon, wherein when the computer program is executed by a processor, the method of any one of claims 1 to 7 or the method of any one of claims 8 to 14 is performed.
